# FASCICULE DE BREVET EUROPEEN

(11) **EP 1 277 930 B1**
(45) Date de publication et mention de la délivrance du brevet: **30.08.2006**
(21) Numéro de dépôt: 02291844.5
(22) Date de dépôt: 19.07.2002
(51) Int. Cl.: F01N 3/22, F01N 3/32

(54) **Procédé et dispositif de réduction d'émission polluante**
Verfahren und Vorrichtung zur Abgasemissionsreduzierung
Method and device for reducing exhaust gas emissions

(30) Priorité: 19.07.2001 FR 0109643
(43) Date de publication de la demande: 22.01.2003
(73) Titulaire: Renault s.a.s., 92100 Boulogne Billancourt (FR)
(72) Inventeur: Batissou-Saliou, Cathy, 78220 Viroflay (FR); Thaveau, Christophe, 45300 Sermaises (FR)

(56) Documents cités:
- EP-A- 0 846 491
- DE-A- 19 806 033
- DE-A- 19 816 276
- US-A- 5 814 283

## Description

La présente invention concerne un procédé de réduction des émissions polluantes contenues dans les gaz d'échappement d'un moteur à combustion interne, équipé de deux pains catalytiques et muni d'un système permettant d'injecter de l'air sur la ligne d'échappement. L'air est injecté en deux points de la ligne d'échappement, entre la sortie du collecteur d'échappement et l'entrée du premier catalyseur d'une part, entre les deux catalyseurs d'autre part.

On sait qu'un pot catalytique traite les gaz d'échappement pour réduire les émissions de polluants par réaction chimique d'oxydoréduction. Celui-ci ne fonctionne qu'à partir d'un certain niveau thermique. Dès qu'on a atteint la température d'amorçage, c'est-à-dire la température à partir de laquelle le premier polluant commence à être traité, des réactions exothermiques d'oxydation se déclenchent sur les composants les plus facilement oxydables, ce qui provoque une élévation de température, et l'efficacité du pot s'accroît. Les gaz sont traités dans l'ordre suivant en fonction de la température du catalyseur: hydrogène (H₂), monoxyde de carbone (CO) puis les hydrocarbures (HC). Pour chaque composant traité, on évalue l'efficacité du pot en mesurant l'évolution, en fonction du temps, de son taux de conversion, c'est-à-dire le rapport, pour un composant donné : (masse à l'entrée du pot - masse en sortie) /masse à l'entrée. Ainsi, par exemple, si tout le CO en entrée est oxydé et donc absent en sortie, le taux de conversion, ou l'efficacité, pour le CO sera de 100%.

Environ 80% des émissions totales de CO et de HC d'un véhicule sont produites pendant sa première minute de fonctionnement. En effet, lorsque le moteur est froid, ses émissions sont accrues. Mais surtout, c'est le temps qu'il faut au catalyseur pour atteindre son taux de conversion maximal. Ainsi, plus sa montée en température après départ est rapide, plus les émissions totales en HC et CO du véhicule seront faibles.

Une solution permettant d'accélérer cette montée en température consiste à envoyer, d'une part, de l'air secondaire en amont du catalyseur et à faire fonctionner, d'autre part, le moteur en mélange riche afin d'accroître sa production de CO et d'H₂. Etant donné que le catalyseur est capable très tôt d'oxyder l'hydrogène et le monoxyde de carbone, on génère des réactions exothermiques d'oxydoréduction dans le pot catalytique. On amène donc plus rapidement le pot à une température de fonctionnement optimale et le cumul des émissions est réduit.

Le système catalytique auquel nous nous intéressons est composé de deux blocs catalytiques. Le premier de petit volume, fortement chargé en métaux précieux, s'amorce très vite et traite rapidement les émissions du moteur. Il n'est toutefois pas capable de traiter des débits moteur importants. Pour cela, on dispose d'un second monolithe, de gros volume, moins chargé en métaux précieux, qui s'amorce plus tard mais qui est capable de traiter de gros débits moteur.

Une telle solution d'injection d'air à l'échappement, telle que décrite précédemment, pose un problème de répartition de l'énergie thermique produite par la réaction exothermique. Le premier monolithe monte très vite en température sous l'effet de l'oxydation du monoxyde de carbone, et le deuxième monolithe a du mal à atteindre sa température d'amorçage par manque de monoxyde de carbone. En effet, dans un premier temps, tout le CO produit par le moteur est oxydé par le premier catalyseur et le second catalyseur n'en bénéficie pas. De plus, pour ne pas détériorer le premier catalyseur, on est contraint d'interrompre l'injection d'air à l'échappement relativement vite. On n'envoie donc pas à l'échappement autant d'énergie « chimique » que l'on voudrait et le second catalyseur est chauffé essentiellement par échange thermique avec les gaz d'échappement.

Pour rééquilibrer la thermique de l'ensemble, une solution consiste à injecter de l'air entre les deux monolithes. Le second monolithe dispose alors d'oxygène pour oxyder le CO non traité par le premier monolithe.

L'objectif d'une telle stratégie est d'amorcer le deuxième monolithe beaucoup plus rapidement. Le volume d'un catalyseur est à l'image du débit échappement qu'il est capable de traiter. On peut alors dimensionner le premier monolithe de telle manière qu'il ne soit plus capable de traiter des débits moteur aussi importants qu'auparavant puisque le second monolithe prend le relais très tôt. Un des avantages principal de cette solution est donc de réduire le volume du premier monolithe. En étant de plus petit volume, le premier catalyseur s'amorce plus tôt et on peut donc obtenir des gains en émissions ainsi qu'en consommation.

Un tel système est décrit dans le brevet DE19906598A1 qui sera commenté ultérieurement.

Le document US5814283 propose un dispositif de réduction des émissions polluantes dont la ligne d'échappement comprend un catalyseur chauffé électriquement situé en amont d'un catalyseur principale et en aval du collecteur d'échappement et un dispositif d'injection d'air à l'échappement comprenant des moyens de génération d'un flux d'air connectés à la ligne d'échappement par deux conduites, une première conduite débouchant en amont du catalyseur chauffé électriquement et en aval du collecteur d'échappement, et une deuxième conduite débouchant entre les deux catalyseurs. Ce dispositif injecte de l'air supplémentaire en amont des catalyseurs que lorsque ceux-ci ont atteint leur température d'oxydation.

Un premier but de l'invention consiste à proposer un procédé de réduction d'émission polluante palliant les inconvénients de l'art antérieur.

Ce but est atteint par un procédé de réduction des émissions polluantes d'un moteur à explosion interne comprenant une étape d'injection d'une quantité variable d'air en amont du catalyseur d'amorçage et en aval du collecteur d'échappement tant que la température du catalyseur d'amorçage est inférieur à une température maximum, une étape d'injection d'une quantité variable d'air entre les deux catalyseurs tant que la température du catalyseur d'amorçage est inférieur à une température maximum.

Selon une autre variante de réalisation, lorsque la température du catalyseur d'amorçage est supérieur à la température d'oxydation, la quantité d'air est déterminée de sorte que le ratio entre le débit d'air envoyé en amont du catalyseur d'amorçage et le débit de monoxyde de carbone produit par le moteur est piloté et supérieur à un seuil déterminé.

Un deuxième but de l'invention consiste à proposer un dispositif de réduction d'émission polluante palliant les inconvénients de l'art antérieur et de réalisation plus simple.

Ce but est atteint par dispositif de réduction des émissions polluantes d'un moteur à explosion interne comportant des moyens de génération d'un flux d'air étant connectés à la ligne d'échappement par deux conduites, une première conduite débouchant en amont du catalyseur d'amorçage et en aval du collecteur d'échappement, et une deuxième conduite débouchant entre les deux catalyseurs caractérisé en ce que les moyens (20, 30, 31) de génération du flux d'air sont pilotés par des moyens de commande, les moyens de commande commandant l'injection d'une quantité variable d'air en amont du catalyseur d'amorçage et en aval du collecteur d'échappement tant que la température du catalyseur d'amorçage est inférieure à une température maximum et l'injection d'une quantité variable d'air entre les deux catalyseurs tant que la température du catalyseur d'amorçage est inférieure à une température maximum.

Selon une autre variante de réalisation, les moyens de génération du flux d'air comprennent une pompe à air alimentant simultanément les deux conduites Selon une autre variante de réalisation, les moyens de génération du flux d'air comprennent deux pompes à air, chaque pompe alimentant une des deux conduites.

Selon une autre variante de réalisation, chaque conduite comprend des moyens d'obturation au moins partielle comprenant une vanne pilotée par des moyens de commande.

Selon une autre variante de réalisation, les moyens de génération du flux d'air sont pilotés par des moyens de commande.

Selon une autre variante de réalisation, les moyens de commande comprennent un calculateur recevant des informations sur le fonctionnement du moteur et sur l'état des catalyseurs pour générer des signaux de commande des moyens de génération du flux d'air et de la ou des vannes d'obturation des conduites pour permettre la montée rapide en efficacité du catalyseur d'amorçage et maintenir les conditions optimales de conversion des polluants des deux catalyseurs en modifiant la valeur du débit d'air dans les conduites.

D'autres particularités et avantages de la présente invention apparaîtront plus clairement dans la description ci-après faite en référence aux dessins annexés dans lesquels :
La figure 1 représente une première variante de réalisation d'un dispositif mettant en oeuvre le procédé selon l'invention
La figure 2 représente une deuxième variante de réalisation d'un dispositif mettant en oeuvre le procédé selon l'invention.

Avant de décrire l'invention il convient de revenir en détail sur une solution proposée dans l'art antérieur par le document DE19906598A1. Comme expliqué précédemment, cette solution suppose de réaliser la première injection d'air dans le collecteur, en aval des soupapes. Cette solution présente un certain nombre d'inconvénients. Notamment, plus on se rapproche de la soupape, plus la contre-pression est élevée. En outre, injecter dans le collecteur suppose de disposer d'autant de piquages d'air que de branches sur le collecteur d'échappement, ce qui augmente considérablement les pertes de charge en aval de la pompe à air. Une pompe à air débite une quantité d'air d'autant plus importante que la contre-pression qui lui est apposée est faible.

Le fait d'injecter de l'air au plus près de la soupape permet de générer des phénomènes de post-oxydation dans le circuit d'échappement en amont du catalyseur. Cela peut permettre de chauffer la ligne échappement plus rapidement et de réduire alors les pertes thermiques des gaz d'échappement entre leur sortie du moteur et leur entrée dans le catalyseur. Cela permet d'atteindre plus rapidement la température d'initiation de l'oxydation du H2 et du CO. Toutefois, en pratique, on atteint cette température d'oxydation très rapidement et la post oxydation dans la ligne d'échappement constitue alors une perte thermique pour le catalyseur. En effet, une partie de l'énergie de la post-oxydation est perdue par échange thermique avec l'extérieur sur toute la portion de la ligne d'échappement située entre le piquage d'air et l'entrée du catalyseur. On prive donc le catalyseur d'une partie de l'énergie délivrée par le moteur.

Si on injecte au plus près des soupapes, une partie de l'oxygène qui passe à la soupape, constituant des gaz brûlés recirculés, (GBR) n'est alors pas utilisable par le catalyseur. De plus, cela engendre une mauvaise maîtrise de la quantité d'oxygène traversant le catalyseur et cela peut être pénalisant pour le contrôle (méthodologies de mise au point, estimateur, solveur....). Enfin, l'oxygène qui passe à la soupape provoque dans certaines zones de fonctionnement moteur des instabilités (ralenti ou faible charge) qui peuvent obliger à couper la pompe à air alors que l'amorçage du catalyseur exigerait le contraire.

Pour injecter de l'air en aval des soupapes, cela suppose de disposer d'autant de piquages d'air que de cylindres et parfois même de modifier la culasse. Ainsi, avec un piquage unique en entrée catalyseur, on dispose d'une architecture plus simple qui est moins coûteuse.

Enfin, pour pouvoir fonctionner correctement, il est indispensable de disposer d'une sonde de richesse sur la ligne d'échappement (sonde lambda ou sonde UEGO). En effet, un catalyseur tri-fonctionnel n'est efficace sur les trois polluants réglementés (HC, CO, NOx) que dans une fenêtre étroite autour de richesse 1. Cette sonde doit voir les gaz en provenance des différents cylindres pour réguler la richesse du moteur. Cela suppose donc que dans l'invention décrite dans le brevet cité, la sonde est située en sortie de collecteur et donc que le piquage d'air se situe en amont de la sonde de richesse.

Selon l'invention, il est plus intéressant de disposer d'un piquage d'air en aval de la sonde lambda, car on peut fonctionner à richesse 1 avec une pompe qui fonctionne. Avant d'enrichir le moteur, on peut faire fonctionner la pompe à air toute seule. Ceci permet un meilleur contrôle des émissions moteur puisque l'on s'affranchit des dispersions de richesse dues aux composants, à leur vieillissement, à leur encrassement, etc. Ceci permet aussi d'amorcer le catalyseur au plus tôt en le maintenant en milieu oxydant sans pour autant avoir à fonctionner en mélange pauvre au moteur et donc sans risquer de détériorer la stabilité de celui-ci. Le catalyseur commence donc à oxyder le CO dès qu'il en est capable. En vieillissant le catalyseur s'amorce à des températures plus élevées et c'est là dessus que le début d'enrichissement moteur est calé. Enclencher la pompe à air plus tôt permet sur un catalyseur neuf de mieux traiter les émissions naturelles de réducteurs (CO, H2) du moteur. D'autre part, en fin d'injection d'air à l'échappement, on commence par ramener la richesse du moteur à 1 grâce au bouclage de richesse avant de couper la pompe à air. Cela permet d'éliminer l'excès d'essence présente dans le volume tampon du mouillage et de l'oxyder dans le catalyseur tout en conservant un réglage robuste.

De plus, en utilisant un piquage en aval du collecteur, on réduit la contre-pression en aval de la pompe. Cela permet soit pour une même pompe de disposer d'un débit d'air plus important, soit pour un même débit d'air d'utiliser une pompe moins puissante, on réduit ainsi les coûts et la consommation de carburant.

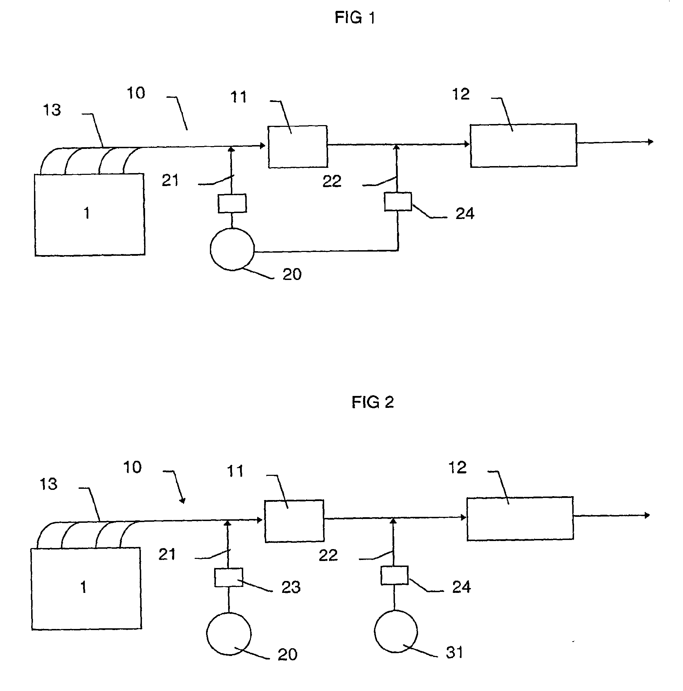

Un dispositif utilisant la présente invention va à présent être décrit en référence aux figures 1 et 2.

Le dispositif selon l'invention est destiné à être monté sur une ligne d'échappement (10) d'un moteur (1) à combustion interne. La ligne d'échappement (10) comprend un système catalytique à deux blocs catalytiques (11, 12). Comme expliqué précédemment, le premier bloc (11) catalytique, appelé bloc d'amorçage, positionné en aval du collecteur (13) d'échappement du moteur (1), le deuxième bloc (12) catalytique, appelé catalyseur principal, est positionné en aval du bloc (11) d'amorçage. Le dispositif comprend des moyens (20, 30, 31) de génération d'un flux d'air reliés à la ligne d'échappement par deux conduites (21, 22) constituant des piquages d'air. La première conduite (21) débouche en amont du bloc (11) d'amorçage et en aval du collecteur (13) d'échappement pour les raisons expliquées précédemment. La deuxième conduite (22) débouche entre les deux blocs (11, 12) catalytique. Les moyens (20, 30, 31) de génération d'un flux d'air sont à débit constant ou à débit variable. De même, dans le cas où les moyens (20, 30, 31) de génération d'un flux d'air sont à débit constant la première et la deuxième conduites peuvent être équipé de moyens (22, 23) d'obturation en toute ou partie des conduites respectives. Ces moyens d'obturation sont, par exemple, des électrovannes pilotées du type RCO ou bien de type « ouverte ou fermé » (en anglais « on-off »). Les moyens (20, 30, 31) de génération d'un flux d'air et les électrovannes sont commandés par des signaux générés par un dispositif de commande (non représenté) approprié tel qu'un calculateur. Le calculateur reçoit des informations relatives au fonctionnement du moteur et à l'état d'amorçage des blocs (11, 12) catalytiques afin de déterminer le débit d'air dans chacune des conduites (21, 22) pour amorcer rapidement et de façon optimale les deux blocs (11,12) catalytiques. L'état d'amorçage des blocs (11, 12) catalytiques peut être déterminé par leur température. Cette température est mesurée par un capteur (non représenté) de température disposé dans ou en aval de chaque bloc catalytique. Dans une autre variante, la température est estimée à partir d'un modèle mathématique en fonction des paramètres de fonctionnement du moteur et des caractéristiques physico-chimiques de chaque bloc catalytique.

Selon la première variante de réalisation représentée à la figure 1, les moyens de génération d'un flux d'air sont constitués d'une seule pompe (20) qui alimente en air les deux conduites (21, 22). Selon la deuxième variante de réalisation représentée à la figure 2, les moyens de génération d'un flux d'air sont constitués de deux pompes. Chaque pompe alimente respectivement une conduite (21, 22). Dans les deux variantes les pompes sont pilotées en tension ou en courant. Selon une autre caractéristique de l'invention, les conduites (21, 22) sont dessinées de telle sorte que le débit d'air du catalyseur principal soit supérieur au débit d'air du catalyseur d'amorçage.

Les pompes et les conduites peuvent être fixé sur la caisse du véhicule.

En agissant de façon adapter sur les pompes (20, 30, 31) et/ou sur les électrovannes (22, 23), on comprend qu'à chaque instant, il possible de contrôler le débit dans chaque conduite (21, 22).

Le procédé selon l'invention va à présent être décrit.

Lorsque le moteur (1) est froid, les deux pains catalytiques sont froids et incapables de traiter le CO ou le H2 émis par le moteur. Celui-ci conserve donc une gestion traditionnelle de la richesse. On ne cherche pas à accroître les émissions de CO et de H2 du moteur puisque celles-ci se retrouveraient intégralement dans l'atmosphère puisque le pouvoir catalytique des blocs est inexistant. Cette première phase dure jusqu'à ce que le premier catalyseur atteigne sa température (Tox1) d'oxydation du H2 et du CO. Il est possible au cours de cette phase d'envoyer de l'air sur le premier catalyseur afin d'accélérer sa montée en température. En vieillissant le catalyseur s'amorce à des températures plus élevées et c'est là dessus que le début d'enrichissement moteur est calé. En enclenchant l'alimentation en air par la première conduite (21) plus tôt permet sur un catalyseur neuf de mieux traiter les émissions naturelles de réducteurs (CO, H2) du moteur. Ceci permet aussi d'amorcer le catalyseur au plus tôt en le maintenant en milieu oxydant sans pour autant avoir à fonctionner en mélange pauvre au moteur et donc sans risquer de détériorer la stabilité de celui-ci.

Lorsque le premier catalyseur a atteint sa température d'oxydation (Tox1) du H2, on enrichit le moteur et on envoie de l'air par la première conduite (21) de telle sorte que le premier catalyseur soit en milieu oxydant. Ce dernier monte rapidement en température grâce aux réactions exothermiques d'oxydation du H2 et du CO. Lorsque la température est suffisante, on passe à la phase suivante.

Lors de cette phase, les débits d'air dans les deux conduites (21, 22) et de CO sont pilotés de telle manière que le premier catalyseur soit en milieu réducteur (catalyse bloquée chimiquement) et le second en milieu oxydant. Les réducteurs traversent alors en grande partie le premier pain sans être traités et vont sur le second. Les réactions d'oxydation ont alors lieu dans le second catalyseur qui chauffe rapidement à son tour. On arrête la stratégie d'alimentation en air lorsque ce dernier a atteint une température que l'on juge suffisante. Même en milieu réducteur, des réactions d'oxydation ont lieu dans le premier monolithe. On contrôle donc sa température et si celle-ci dépasse un seuil de température risquant de le détériorer on stoppe la stratégie en arrêtant l'enrichissement du moteur et la ou les pompes à air.

Le premier tableau résume les différentes phases d'amorçage des deux blocs catalytiques en fonction de leur température.

Tci représente la température d'un bloc catalytique

Toxi représente la température d'oxydation d'un bloc catalytique

Tfi représente la température de conversion maximale des polluants d'un bloc catalytique

TiMax représente la température maximum admissible par un bloc catalytique

Ci représente un bloc catalytique.

L'indice 1 représente le catalyseur d'amorçage et l'indice 2 représente le catalyseur principal.

| | Tc2 < Tox2 | Tox2 < Tc2 < Tf2 | Tc2 >Tf2 |
|---|---|---|---|
| Tc1 < Tox1 | Catalyse C1/C2: bloquée thermiquement. | | |
| Tox1 <Tc1 < Tf1 | Chauffage chimique premier monolithe Etat C1 : oxydant. Etat C2 : oxydant. Catalyse C1 : active. Catalyse C2 : bloquée thermiquement. | Chauffage chimique second monolithe Etat C1 : réducteur. Etat C2 : oxydant. Catalyse C1 : bloquée chimiquement. Catalyse C2 : active. | Fin de la mise en action. Pompe à air arrêtée Retour à la richesse standard. |
| Tf1 <Tc1 < T1 max | Phase de maintien thermique du premier monolithe afin de chauffer le second par transfert. Durée courte. Etat C1 : réducteur. Etat C2 : oxydant. Catalyse C1 : bloquée chimiquement. Catalyse C2 : bloquée thermiquement | Phase de chauffage chimique du second monolithe Etat C1 : réducteur. Etat C2 : oxydant. Catalyse C1 : bloquée chimiquement. Catalyse C2 : active | Fin de la mise en action. Pompe à air arrêtée Retour à la richesse standard. |
| Tc1 >T1 max | Etat C1/C2 : Richesse 1 Catalyse C1/C2 : active | | |

Le deuxième tableau résume les différentes étapes du procédé selon l'invention en fonction de la température des blocs catalytique.

Qa1 représente la valeur du débit d'air du catalyseur d'amorçage

Qco représente la valeur du débit de CO dans la ligne d'échappement

| | | | |
|---|---|---|---|
| | Tc2 < Tox2 | Tox2< Tc2 < Tf2 | Tc2 >Tf2 |
| Tc1 < Tox1 | Gestion standard de la richesse Possible injection d'air | | |
| Tox1 <Tc1 < Tf1 | Gestion de la richesse du type Qa1/Qco constant et supérieur à un seuil déterminé. | Gestion de la richesse du type Qa1/Qco constant et supérieur à un seuil déterminé | - |
| Tc1max >Tc1 > Tf1 | Gestion de la richesse du type Qa1/Qco constant et supérieur à un seuil déterminé. | | - |
| Tc1 >T1 max | Fin de la mise en action. Pompe à air à air à off et retour à la richesse standard. | | |

Ainsi, selon l'invention, lorsque la température (Tc1) du catalyseur d'amorçage (11) est inférieur à sa température (Tox1) d'oxydation, la gestion de la richesse du moteur n'est pas modifiée et de l'air est injecté au moins en amont du catalyseur (11) d'amorçage.

Lorsque le catalyseur d'amorçage atteint sa température d'oxydation du CO, la richesse est augmentée de telle manière que l'on obtienne un débit de CO assurant un milieu oxydant sur le catalyseur d'amorçage. Ceci est obtenu en maintenant le ratio débit d'air/débit de CO constant et supérieur un seuil déterminé. Dans ces conditions, le catalyseur d'amorçage s'échauffe. Lorsqu'il atteint sa température de conversion maximale des polluants (Tf1), on augmente encore la richesse pour lui permettre d'être en milieu réducteur. La richesse sera telle que le catalyseur principal soit en milieu oxydant. Même en milieu réducteur, des réactions d'oxydation ont lieu dans le catalyseur d'amorçage. On contrôle donc sa température et si celle-ci dépasse un seuil de température risquant de le détériorer on stoppe la stratégie en arrêtant l'enrichissement et la pompe à air.

Bien entendu, l'invention n'est pas limitée au mode de réalisation qui vient d'être décrit qu'à titre d'exemple.

## Revendications

1. Procédé de réduction des émissions polluantes d'un moteur à explosion interne dont la ligne d'échappement comprend un catalyseur d'amorçage situé en amont d'un catalyseur principal et en aval du collecteur d'échappement, le moteur étant équipé d'un dispositif d'injection d'air à l'échappement, le procédé étant **caractérisé en ce qu'**il comprend
- une étape d'injection d'une quantité variable d'air en amont du catalyseur d'amorçage et en aval du collecteur d'échappement tant que la température du catalyseur d'amorçage est inférieure à une température maximum
- une étape d'injection d'une quantité variable d'air entre les deux catalyseurs tant que la température du catalyseur d'amorçage est inférieure à une température maximum.

2. Procédé selon la revendication 1, **caractérisé en ce que** lorsque la température du catalyseur d'amorçage est supérieur à la température d'oxydation, la quantité d'air est déterminée de sorte que le ratio entre le débit d'air envoyé en amont du catalyseur d'amorçage et le débit de monoxyde de carbone produit par le moteur est piloté et supérieur à un seuil déterminé.

3. Dispositif de réduction des émissions polluantes d'un moteur (1) à explosion interne dont la ligne (10) d'échappement comprend un catalyseur (11) d'amorçage situé en amont d'un catalyseur (12) principale et en aval du collecteur (13) d'échappement et un dispositif d'injection d'air à l'échappement comprenant des moyens (20, 30, 31) de génération d'un flux d'air connectés à la ligne d'échappement (10) par deux conduites (21, 22), une première conduite (21) débouchant en amont du catalyseur (11) d'amorçage et en aval du collecteur (13) d'échappement, et une deuxième conduite (22) débouchant entre les deux catalyseurs (11, 12), **caractérisé en ce que** les moyens (20, 30, 31) de génération du flux d'air sont pilotés par des moyens de commande, les moyens de commande commandant l'injection d'une quantité variable d'air en amont du catalyseur (11) d'amorçage et en aval du collecteur (13) d'échappement tant que la température du catalyseur (11) d'amorçage est inférieure à une température maximum et l'injection d'une quantité variable d'air entre les deux catalyseurs (11,12) tant que la température du catalyseur (11) d'amorçage est inférieure à une température maximum.

4. Dispositif selon la revendication 3, **caractérisé en ce que** les moyens de génération du flux d'air comprennent une pompe (20) à air alimentant simultanément les deux conduites (21, 22).

5. Dispositif selon la revendication 3, **caractérisé en ce que** les moyens de génération du flux d'air comprennent deux pompes à air (30, 31), chaque pompe alimentant une des deux conduites (21, 22).

6. Dispositif selon l'une des revendications 3 à 5, **caractérisé en ce que** chaque conduite (21, 22) comprend des moyens (23, 24) d'obturation au moins partielle comprenant une vanne pilotée par des moyens de commande.

7. Dispositif selon l'une quelconque des revendications 3 à 7, **caractérisé en ce que** les moyens de commande comprennent un calculateur recevant des informations sur le fonctionnement du moteur et sur l'état des catalyseurs (11, 12) pour générer des signaux de commande des moyens (20, 30, 31) de génération du flux d'air et de la ou des vannes d'obturation des conduites (21, 22) pour permettre la montée rapide en efficacité du catalyseur d'amorçage et maintenir les conditions optimales de conversion des polluants des deux catalyseurs (11, 12) en modifiant la valeur du débit d'air dans les conduites.

## Claims

1. Method for reducing pollutant emissions of an internal combustion engine whereof the exhaust line comprises a priming catalyst located upstream of a main catalyst and downstream of the exhaust manifold, the engine being equipped with an air injection device at the exhaust, the method being **characterized in that** it comprises
- a step for injecting a variable quantity of air upstream of the priming catalyst and downstream of the exhaust manifold as long as the temperature of the priming catalyst is lower than a maximum temperature
- a step for injecting a variable quantity of air between the two catalysts as long as the temperature of the priming catalyst is lower than a maximum temperature.

2. Method according to Claim 1, **characterized in that** when the temperature of the priming catalyst is higher than the oxidation temperature, the quantity of air is determined so that the ratio of the air flow rate sent upstream of the priming catalyst to the flow rate of carbon monoxide produced by the engine is controlled and higher than a predefined threshold.

3. Device for reducing pollutant emissions of an internal combustion engine (1) whereof the exhaust line (10) comprises a priming catalyst (11) located upstream of a main catalyst (12) and downstream of the exhaust manifold (13) and an air injection device at the exhaust comprising air flow generating means (20, 30, 31) connected to the exhaust line (10) by two lines (21, 22), a first line (21) terminating upstream of the priming catalyst (11) and downstream of the exhaust manifold (13), and a second line (22) terminating between the two catalysts (11, 12), **characterized in that** the air flow generating means (20, 30, 31) are controlled by control means, the control means controlling the injection of a variable quantity of air upstream of the priming catalyst (11) and downstream of the exhaust manifold (13) as long as the temperature of the priming catalyst (11) is lower than a maximum temperature and the injection of a variable quantity of air between the two catalysts (11, 12) as long as the temperature of the priming catalyst (11) is lower than a maximum temperature.

4. Device according to Claim 3, **characterized in that** the air flow generating means comprise an air pump (20) simultaneously supplying the two lines (21, 22).

5. Device according to Claim 3, **characterized in that** the air flow generating means comprise two air pumps (30, 31), each pump supplying one of the two lines (21, 22).

6. Device according to one of Claims 3 to 5, **characterized in that** each line (21, 22) comprises at least partial shutoff means (23, 24) comprising a valve controlled by the control means.

7. Device according to any one of Claims 3 to 6, **characterized in that** the control means comprise a computer receiving data on the operation of the engine and on the state of the catalysts (11, 12) for generating signals for controlling the air flow generating means (20, 30, 31) and the shutoff valve or valves of the lines (21, 22) for rapidly increasing the efficiency of the priming catalyst and maintaining the optimal conditions for converting the pollutants of the two catalysts (11, 12) by changing the value of the air flow rate in the lines.

## Patentansprüche

1. Verfahren zur Reduzierung der Schadstoffemissionen eines Verbrennungsmotors, dessen Auspuffleitung einen Startkatalysator aufweist, der sich vor einem Hauptkatalysator und hinter dem Auspuffkrümmer befindet, wobei der Motor mit einer Lufteinblasvorrichtung am Auspuff ausgestattet ist, wobei das Verfahren **dadurch gekennzeichnet ist, dass** es aufweist
- einen Schritt des Einblasens einer variablen Luftmenge vor dem Startkatalysator und hinter dem Auspuffkrümmer, solange die Temperatur des Startkatalysators niedriger ist als eine maximale Temperatur,
- einen Schritt des Einblasens einer variablen Luftmenge zwischen die beiden Katalysatoren, solange die Temperatur des Startkatalysators unter einer maximalen Temperatur liegt.

2. Verfahren nach Anspruch 1, **dadurch gekennzeichnet, dass**, wenn die Temperatur des Startkatalysators höher ist als die Oxidationstemperatur, die Luftmenge so bestimmt wird, dass das Verhältnis zwischen der vor dem Startkatalysator eingespeisten Luftmenge und der vom Motor erzeugten Kohlenmonoxidmenge gesteuert wird und höher als ein bestimmter Schwellwert ist.

3. Vorrichtung zur Reduzierung der Schadstoffemissionen eines Verbrennungsmotors (1), dessen Auspuffleitung (10) einen Startkatalysator (11), der sich vor einem Hauptkatalysator (12) und hinter dem Auspuffkrümmer (13) befindet, und eine Lufteinblasvorrichtung am Auspuff aufweist, die Mittel (20, 30, 31) zur Erzeugung eines Luftstroms aufweist, die mit der Auspuffleitung (10) über zwei Leitungen (21, 22) verbunden sind, wobei eine erste Leitung (21) vor dem Startkatalysator (11) und hinter dem Auspuffkrümmer (13) und eine zweite Leitung (22) zwischen den beiden Katalysatoren (11, 12) mündet, **dadurch gekennzeichnet, dass** die Mittel (20, 30, 31) zur Erzeugung des Luftstroms von Steuermitteln gesteuert werden, wobei die Steuermittel das Einblasen einer variablen Luftmenge vor dem Startkatalysator (11) und hinter dem Auspuffkrümmer (13) steuern, solange die Temperatur des Startkatalysators (11) unter einer maximalen Temperatur liegt, und das Einblasen einer variablen Luftmenge zwischen den beiden Katalysatoren (11, 12) steuert, solange die Temperatur des Startkatalysators (11) unter einer maximalen Temperatur liegt.

4. Vorrichtung nach Anspruch 3, **dadurch gekennzeichnet, dass** die Mittel zur Erzeugung des Luftstroms eine Luftpumpe (20) aufweisen, die gleichzeitig die beiden Leitungen (21, 22) speist.

5. Vorrichtung nach Anspruch 3, **dadurch gekennzeichnet, dass** die Mittel zur Erzeugung des Luftstroms zwei Luftpumpen (30, 31) aufweisen, wobei jede Pumpe eine der beiden Leitungen (21, 22) speist.

6. Vorrichtung nach einem der Ansprüche 3 bis 5, **dadurch gekennzeichnet, dass** jede Leitung (21, 22) Mittel (23, 24) zum zumindest teilweisen Verschluss aufweisen, die ein von Steuermitteln gesteuertes Ventil enthalten.

7. Vorrichtung nach einem der Ansprüche 3 bis 6, **dadurch gekennzeichnet, dass** die Steuermittel einen Rechner aufweisen, der Informationen über den Betrieb des Motors und über den Zustand der Katalysatoren (11, 12) empfängt, um Steuersignale der Mittel (20, 30, 31) zur Erzeugung des Luftstroms und des Verschlussventils oder der Verschlussventile der Leitungen (21, 22) zu erzeugen, um den schnellen Wirkungsanstieg des Startkatalysators zu ermöglichen und die optimalen Schadstoff-Umwandlungsbedingungen der beiden Katalysatoren (11, 12) aufrechtzuerhalten, indem der Wert der Luftmenge in den Leitungen verändert wird.
